(19)

Europäisches
Patentamt
European
Patent Office
Office européen
des brevets

(11) **EP 2 523 177 A2**

(12) **EUROPEAN PATENT APPLICATION**

(43) Date of publication:
**14.11.2012 Bulletin 2012/46**

(51) Int Cl.:
***G09B 5/04*** (2006.01)

(21) Application number: **11184870.1**

(22) Date of filing: **12.10.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **11.05.2011 TW 100116503
23.08.2011 TW 100130165**

(71) Applicant: **Kun Jou International Co., Ltd.
Tainan City, Taipei (TW)**

(72) Inventor: **Chu, Chiu-Ling
Tainan City (TW)**

(74) Representative: **Cohausz & Florack
Bleichstraße 14
40211 Düsseldorf (DE)**

(54) **Voice learning method using an electronic device**

(57)   In a voice learning method using an electronic
device, the owner of the electronic device is allowed to
store a plurality of learning file units in a data storage unit
(2) of the electronic device. Each learning file unit in-
cludes an audio file having individual audio content to be
learned. A number (N) of target learning file unit is se-
lected from the learning file units stored in the data stor-
age unit (2). When a communicating unit (3) of the elec-
tronic device communicates with a communications net-
work, an audio playing unit (4) of the electronic device is
enabled to play the audio files of the target learning file
unit in order in response to incoming signals received by
the communicating unit (3).

FIG. 2

## Description

The invention relates to a voice learning method using an electronic device.

For learning language or music purposes, a voice learning appliance, such as a conventional audio playing device, is used to play an audio file with audio content to be learned. In such a voice learning method, the conventional audio playing device is operated manually to play a desired audio file. If the learner does not frequently operate the voice learning appliance to repeatedly play the desired audio file, learning efficiency cannot be ensured.

Therefore, an object of the present invention is to provide a video learning method using an electronic device that can overcome the aforesaid drawbacks of the prior art.

According to one aspect of the present invention, there is provided a voice learning method using an electronic device. The electronic device includes a data storage unit, a communicating unit capable of communicating with a communications network, and an audio playing unit. The voice learning method comprises the steps of:

a) allowing the owner of the electronic device to store a plurality of learning file units in the data storage unit, each of the learning file units including an audio file that has individual audio content to be learned;

b) selecting a number (N) target learning file unit in order from the learning file units stored in step a), where $N \geqq 2$; and

c) when the communicating unit communicates with the communications network, enabling the audio playing unit to play the audio file of an $i^{th}$ one of the target learning file units selected in step b) upon receipt of any incoming signal from the communications network by the communicating unit during a $(p \times N + i)^{th}$ one of a plurality of continuous predetermined time periods, where p is an integer not less than zero, and $N \geqq i \geqq 1$.

According to another aspect of the present invention, there is provided a voice learning method using an electronic device. The electronic device includes a data storage unit, a communicating unit capable of communicating with a communications network, and an audio playing unit. The voice learning method comprises the steps of:

a) allowing the owner of the electronic device to store a plurality of learning file units in the data storage unit, each of the learning file units including an audio file that has individual audio content to be learned;

b) selecting a number (N) target learning file unit in order from the learning file units stored in step a), where $N \geqq 2$; and

c) when the communicating unit communicates with the communications network, enabling the audio playing unit to play the audio file of an $i^{th}$ one of the target learning file units selected in step b) upon receipt of each of a $(p \times N + i)^{th}$ sequence of M incoming signals of a plurality of incoming signals from the communications network in order, where each of p and M is an integer, $p \geqq 0$, $M \geqq 1$, and $N \geqq i \geqq 1$.

Other features and advantages of the present invention will become apparent in the following detailed description of the preferred embodiments with reference to the accompanying drawings, of which:

Figure 1 is a schematic circuit block diagram illustrating an electronic device that is configured for implementing the first preferred embodiment of a voice learning method according to the present invention;
Figure 2 is a flow chart of the first preferred embodiment; and
Figure 3 is a flow chart of the second preferred embodiment of a voice learning method using an electronic device according to the present invention.

Before the present invention is described in greater detail, it should be noted that like elements are denoted by the same reference numerals throughout the disclosure.

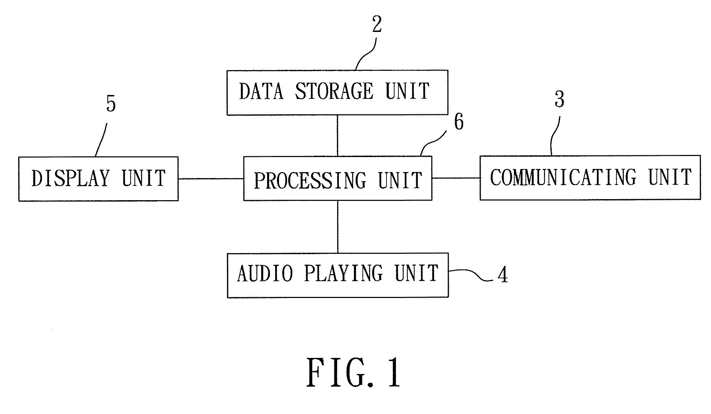

Referring to Figure 1, an electronic device configured for implementing the first preferred embodiment of a voice learning method according to the present invention is shown to include a data storage unit 2, a communicating unit 3 capable of communicating with a communications network, an audio playing unit 4, a display unit 5, and a processing unit 6 connected electrically to the data storage unit 2, the communicating unit 3, the audio playing unit 4 and the display unit 5. In this embodiment, the electronic device is a handheld wireless communication device, and the communications network is a wireless communications network. Alternatively, the electronic device can be an indoor phone, a network phone or a planar computer. In addition, the data storage unit 2 stores at least one ring file, and an alert sound file for alerting electromagnetic waves therein.

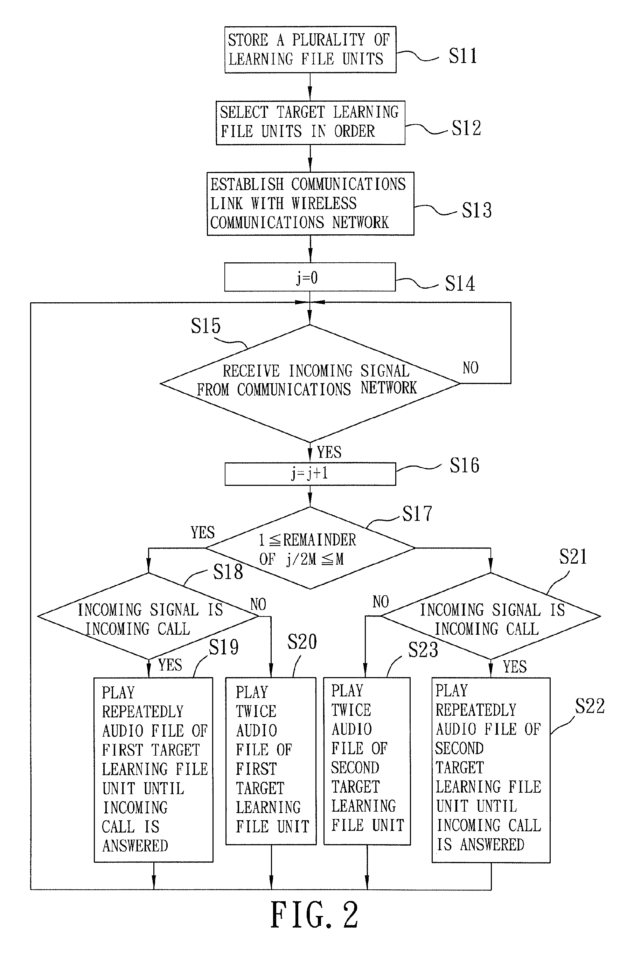

Figure 2 is a flow chart of the first preferred embodiment.

In step S11, the owner of the electronic device, i.e., the learner, is allowed to store a plurality of learning file units in the data storage unit 2 in a known manner. Preferably, each learning file unit includes an audio file that has individual audio content to be learned, an individual text file that has text content associated with the audio content, and a background picture file corresponding to the audio file. In this embodiment, the audio file of each learning file unit is one of a conversation voice file, a word voice file, a song voice file and a music audio file in a file format of MP3, WAVE or others. Moreover, the audio content of the word voice file includes various pronunciation voice data with the same word meaning.

In step S12, a number (N) of target learning file units are selected from the learning file units stored in the data storage unit 2 by the owner of the electronic device in order, where N≧2. In this embodiment, the number (N) is 2, for example. In other embodiments, the number (N) can be different numerals. In addition, the target learning file units can be determined based on keyword information. For instance, when the keyword information is "airport", the audio files of the target learning file units determined based on the keyword information includes conversation voice files or song voice files related to "airport". Alternatively, the target learning file units can be determined in an interactive manner, such as a question-and-answer manner.

In step S13, the electronic device is allowed to establish a communications link with the wireless communications network.

In step S14, a parameter (j) denotes the number of incoming signals. Thus, initially, the parameter (i) is set to 0.

In step S15, it is determined whether the communicating unit 3 receives an incoming signal from the communications network. If the result is affirmative, the flow goes to step S16. Otherwise, the flow goes back to step S15.

In step S16, the parameter (j) is set to j+1.

In step S17, the processing unit 6 determines whether $(p \times N) \times M+1 \leqq j \leqq (p \times N+1) \times M$, where N=2, p is an integer not less than zero, and M is an integer not less than one. In other words, it is determined whether $1 \leqq$ the remainder of $\dfrac{j}{2M} \leqq M$. If the result is affirmative, the flow goes to step S18. Otherwise, the flow goes to step S21. In addition, for each target learning file unit, the audio file is played upon receipt of each of a corresponding sequence of M incoming signals from the communications network. For example, when N=2 and M=3, each of the first and second target learning file units, the audio file is played upon receipt of each of a corresponding sequence of three incoming signals from the communications network.

In step S18, the processing unit 6 determines whether the incoming signal is an incoming call. If the result is affirmative, the flow goes to step S19. When the incoming signal is not an incoming call, in this case, the incoming signal is an incoming message. Then, the flow goes to step S20.

In step S19, the processing unit 6 enables the audio playing unit 4 to play repeatedly the audio file of a first one of the target learning file units until the incoming call is answered. In this embodiment, preferably, the processing unit 6 further enables the display unit 3 to display the text file and the background picture file of the first one of the target learning file units during playing of the audio file of the first one of the target learning file units. In addition, the processing unit 6 enables the audio playing unit 4 to play the ring file prior to playing the audio file of the first one of the target learning file units.

In step S20, the processing unit 6 enables the audio playing unit 4 to play twice the audio file of the first one of the target learning file units. Similarly, the processing unit 6 enables the display unit 3 to display the text file and the background picture file of the first one of the target learning file units during playing of the audio file of the first one of the target learning file units, and enables the audio playing unit 4 to play the ring file prior to playing the audio file of the first one of the target learning file units.

In step S21, when the remainder of $\dfrac{j}{2M}$ is one of zero, and M+1 to 2M-1, the processing unit 6 determines whether the incoming signal is an incoming call. If the result is affirmative, the flow goes to step S22. When the incoming signal is not an incoming call, in this case, the incoming signal is an incoming message. Then, the flow goes to step S23.

In step S22, the processing unit 6 enables the audio playing unit 4 to play repeatedly the audio file of a second one of the target learning file units until the incoming call is answered. Preferably, the processing unit 6 enables the display unit 3 to display the text file and the background picture file of the second one of the target learning file units during playing of the audio file of the second one of the target learning file units. It is noted that the processing unit 6 enables the audio playing unit 4 to play the ring file prior to playing the audio file of the second one of the target learning file units.

In step S23, the processing unit 6 enables the audio playing unit 4 to play twice the audio file of the second one of the target learning file units. Similarly, the processing unit 6 enables the display unit 3 to display the text file and the background picture file of the second one of the target learning file units during playing of the audio file of the second one of the target learning file units. In addition, the processing unit 6 enables the audio playing unit 4 to play the ring file prior to playing the audio file of the second one of the target learning file units.

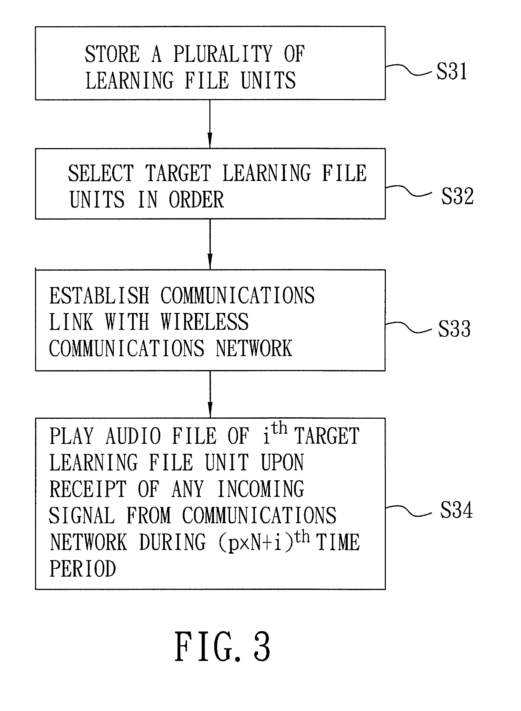

Figure 3 is a flow chart of the first preferred embodiment of a voice learning method using an electronic device according to the present invention. The electronic device has the same configuration as that of the first preferred embodiment.

In steps S31, similar to step S11 of the first preferred embodiment, the owner of the electronic device is allowed to store in the data storage unit 2 a plurality of learning file units, which are identical to those of the first preferred embodiment.

In step S32, similar to step S12 of the first preferred embodiment, a number (N) of target learning file units are selected from the learning file units stored in the data storage unit 2 by the owner of the electronic device in order, where N≧2.

In step S33, similar to step S13 of the first preferred embodiment, the electronic device is allowed to establish a communications link with the wireless communications network.

In step S34, the processing unit 6 enables the audio playing unit 4 to play the audio file of an $i^{th}$ one of the target learning file units upon receipt of any incoming signal from the communications network by the communicating unit 3 during a $(p{\times}N{+}i)^{th}$ one of a plurality of continuous predetermined time periods, where p is an integer not less than zero, and $N{\geqq}i{\geqq}1$. In this embodiment, preferably, the processing unit 6 further enables the display unit 6 to display the text file and the background picture file of the $i^{th}$ one of the target learning file units during playing of the audio file of the $i^{th}$ one of the target learning file units. In addition, the processing unit 6 enables the audio playing unit 4 to play the ring file prior to playing the audio file of the $i^{th}$ one of the target learning file units. Furthermore, when an incoming signal received by the communicating unit 3 during the $(p{\times}N{+}i)^{th}$ one of the determined time periods is an incoming call, the audio file of the $i^{th}$ one of the target learning file units is repeatedly played until the incoming call is answered. When an incoming signal received by the communicating unit 3 during the $(p{\times}N{+}i)^{th}$ one of the determined time periods is an incoming message, the audio file of the $i^{th}$ one of the target learning file units is played twice. For example, if the predetermined time period is a period of three days, the audio file of each target learning file unit is to be played during a corresponding period of three days.

In sum, since the audio files of the target learning file units can be automatically played in response to incoming signals received by the electronic device without manual operation of a voice learning appliance. In addition, the voice learning method of the present invention can enable the learner to frequently listen the audio content of the desired audio file played by the audio playing unit 4 in an insignificant time period, thereby resulting in an enhanced learning efficiency.

**Claims**

1. A voice learning method using an electronic device, the electronic device including a data storage unit (2), a communicating unit (3) capable of communicating with a communications network, and an audio playing unit (4), said voice learning method **characterized by** the steps of:

    a) allowing the owner of the electronic device to store a plurality of learning file units in the data storage unit (2), each of the learning file units including an audio file that has individual audio content to be learned;
    b) selecting a number (N) target learning file unit in order from the learning file units stored in step a), where $N{\geqq}2$; and
    c) when the communicating unit (3) communicates with the communications network, enabling the audio playing unit (4) to play the audio file of an $i^{th}$ one of the target learning file units selected in step b) upon receipt of each of a $(p{\times}N{+}i)^{th}$ sequence of M incoming signals of a plurality of incoming signals from the communications network in order, where each of p and M is an integer, $p{\geqq}0$, $M{\geqq}1$, and $N{\geqq}i{\geqq}1$.

2. The voice learning method as claimed in Claim 1, the data storage unit (2) further storing a ring file, **characterized in that**, in step c), the audio playing unit (4) is configured to play the ring file stored in the data storage unit prior to playing the audio file of each of the target learning file units selected in step b).

3. The voice learning method as claimed in Claim 1, the electronic device further including a display unit (5), **characterized in that**, in step a), each of the learning file units further includes an individual text file associated with the audio file, said voice learning method further **characterized by** the step of:

    d) enabling the display unit (5) to display the text file of the $i^{th}$ one of the target learning file units selected in step b) during playing of the audio file of the $i^{th}$ one of the target learning file units selected in step b).

4. The voice learning method as claimed in Claim 1, further **characterized in that** the audio file of each of the learning file units is a word voice file, the audio content of the word voice file including various pronunciation voice data with the same word meaning.

5. The voice learning method as claimed in Claim 1, **characterized in that** the target learning file units selected in step b) is determined based on keyword information.

6. The voice learning method as claimed in Claim 1, **characterized in that** the target learning file units selected in step b) is determined in an interactive manner.

7. A voice learning method using an electronic device, the electronic device including a data storage unit (2), a communicating unit (3) capable of communicating with a communications network, and an audio playing unit (4), said voice learning method **characterized by** the steps of:

    a) allowing the owner of the electronic device to store a plurality of learning file units in the data storage unit (2), each of the learning file units including an audio file that has individual audio content to be learned;
    b) selecting a number (N) target learning file unit in order from the learning file units stored in step a), where $N \geq 2$; and

c) when the communicating unit communicates with the communications network, enabling the audio playing unit (4) to play the audio file of an $i^{th}$ one of the target learning file units selected in step b) upon receipt of any incoming signal from the communications network by the communicating unit during a $(p \times N+i)^{th}$ one of a plurality of continuous predetermined time periods, where p is an integer not less than zero, and $N \geq i \geq 1$.

8. The voice learning method as claimed in Claim 7, the data storage unit (2) further storing a ring file, **characterized in that**, in step c), the audio playing unit(4) is configured to play the ring file stored in the data storage unit (4) prior to playing the audio file of each of the target learning file units selected in step b).

9. The voice learning method as claimed in Claim 7, **characterized in that**, in step c), when an incoming signal received by the communicating unit (3) during the $(p \times N+i)^{th}$ one of the predetermined time periods is an incoming call, the audio playing unit (4) is configured to repeatedly play the audio file of the $i^{th}$ one of the target learning file units selected in step b) until the incoming call is answered.

10. The voice learning method as claimed in Claim 7, **characterized in that**, in step c), when an incoming signal received by the communicating unit (3) during the $(p \times N+i)^{th}$ one of the predetermined time periods is an incoming message, the audio playing unit (4) is configured to play twice the audio file of the $i^{th}$ one of the target learning file units selected in step b).

11. The voice learning method as claimed in Claim 7, the electronic device further including a display unit (5), **characterized in that**, in step a), each of the learning file units further includes an individual text file associated with the audio file, said voice learning method further **characterized by** the step of:

   d) enabling the display unit (5) to display the text file of the $i^{th}$ one of the target learning file units selected in step b) during playing of the audio file of the $i^{th}$ one of the target learning file units selected in step b).

12. The voice learning method as claimed in Claim 7, further **characterized in that** the audio file of each of the learning file units is a word voice file, the audio content of the word voice file including various pronunciation voice data with the same word meaning.

13. The voice learning method as claimed in Claim 7, **characterized in that** the target learning file units selected in step b) is determined based on keyword information.

14. The voice learning method as claimed in Claim 7, **characterized in that** the target learning file units selected in step b) is determined in an interactive manner.

15. The voice learning method as claimed in Claim 7, the electronic device further including a display unit (5), **characterized in that**, in step a), each of the learning file units further includes a background picture file corresponding to the audio file, said voice learning method further **characterized by** the step of:

   d) enabling the display unit (5) to display the background picture file of the $i^{th}$ one of the target learning file units selected in step b) during playing of the audio file of the $i^{th}$ one of the target learning file units selected in step b).

FIG. 1

STORE A PLURALITY OF LEARNING FILE UNITS —— S11

SELECT TARGET LEARNING FILE UNITS IN ORDER —— S12

ESTABLISH COMMUNICATIONS LINK WITH WIRELESS COMMUNICATIONS NETWORK —— S13

$j=0$ —— S14

S15

RECEIVE INCOMING SIGNAL FROM COMMUNICATIONS NETWORK —— NO

YES

$j=j+1$ —— S16

S17

$1 \leqq$ REMAINDER OF $j/2M \leqq M$

YES

S18

INCOMING SIGNAL IS INCOMING CALL —— NO

YES —— S19

PLAY REPEATEDLY AUDIO FILE OF FIRST TARGET LEARNING FILE UNIT UNTIL INCOMING CALL IS ANSWERED

S20

PLAY TWICE AUDIO FILE OF FIRST TARGET LEARNING FILE UNIT

NO

PLAY TWICE AUDIO FILE OF SECOND TARGET LEARNING FILE UNIT

S23

NO

S21

INCOMING SIGNAL IS INCOMING CALL

YES

S22

PLAY REPEATEDLY AUDIO FILE OF SECOND TARGET LEARNING FILE UNIT UNTIL INCOMING CALL IS ANSWERED

FIG. 2

7

STORE A PLURALITY OF
LEARNING FILE UNITS — S31

SELECT TARGET LEARNING FILE
UNITS IN ORDER — S32

ESTABLISH COMMUNICATIONS
LINK WITH WIRELESS
COMMUNICATIONS NETWORK — S33

PLAY AUDIO FILE OF $i^{th}$ TARGET
LEARNING FILE UNIT UPON
RECEIPT OF ANY INCOMING
SIGNAL FROM COMMUNICATIONS
NETWORK DURING $(p \times N + i)^{th}$ TIME
PERIOD — S34

FIG. 3